Europäisches Patentamt

European Patent Office

Office européen des brevets

(11) Veröffentlichungsnummer: **0 342 419 B1**

(12) **EUROPÄISCHE PATENTSCHRIFT**

(45) Veröffentlichungstag der Patentschrift: **28.10.92**

(21) Anmeldenummer: **89107815.6**

(22) Anmeldetag: **28.04.89**

(51) Int. Cl.5: **H04N 5/33**

(54) Verfahren zur Beobachtung einer Szene und Einrichtung zur Durchführung des Verfahrens.

(30) Priorität: **19.05.88 DE 3817159**

(43) Veröffentlichungstag der Anmeldung:
**23.11.89 Patentblatt 89/47**

(45) Bekanntmachung des Hinweises auf die Patenterteilung:
**28.10.92 Patentblatt 92/44**

(84) Benannte Vertragsstaaten:
**BE CH DE FR GB IT LI NL SE**

(56) Entgegenhaltungen:
**EP-A- 0 258 803**
**DE-A- 3 146 552**
**US-A- 3 654 386**
**US-A- 4 199 785**

**PATENT ABSTRACTS OF JAPAN, Band 11, Nr. 194 (P-588)[2641], 23. Juni 1987, Seite 48 P 588; & JP-A-62 17 724 (NEC CORP) 26-01-1987**

(73) Patentinhaber: **SIEMENS AKTIENGESELL-SCHAFT**
**Wittelsbacherplatz 2**
**W-8000 München 2(DE)**

(72) Erfinder: **Grage, Ludger**
**Frühlingstrasse 46**
**W-8031 Eichenau(DE)**
Erfinder: **Dato, Paul, Dr.**
**Auenstrasse 1A**
**W-8080 Emmering(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Beobachtung einer Szene, bei dem die Szene mit einem auf der Bildaufnahmeseite vorgesehenen Infrarot-Bildsystem mit zwei optischen Kanälen unterschiedlicher Sehfelder beobachtet und auf der Bilddarstellungsseite die durch den Kanal mit dem großen Sehfeld erfaßte Übersichts-Szene sowie die durch den Kanal mit dem kleinen Sehfeld erfaßte Szene dargestellt wird, wobei die IR-Bildsignale beider Kanäle zunächst mit Hilfe von zwei Umwandlungseinrichtungen in TV-Videosignale umgewandelt und mit einer ersten Synchronisiereinrichtung aufeinander synchronisiert und dann einer Bildmischeinrichtung zum Erzeugen eines Mischvideosignals zugeführt werden, in welchem die beiden unterschiedlichen Sehfelder gemeinsam erscheinen und das anschließend zur Sichtbarmachung einer einzigen Bilddarstellungseinrichtung zugeführt wird.

Zur Beobachtung einer Szene werden heutzutage häufig Wärmebildgeräte verwendet. Derartige Geräte können auch nachts eingesetzt werden und ermöglichen eine Ortung und Beobachtung von wärmestrahlenden Objekten sowie in Verbindung mit geeigneten Darstellungseinrichtungen auch eine Flugführung und Navigation bei Nacht. Bei der Beobachtung eines größeren Bereiches im allgemeinen wie auch zur Flugführung und Navigation bei Nacht im besonderen ist es erwünscht, sowohl die gesamte Szene überblicken als auch Details innerhalb der Gesamtszene erkennen zu können. Es ist daher zweckmäßig, die Szene mit zwei Wärmebildgeräten unterschiedlicher Vergrößerung zu beobachten, dabei mittels des ersten Wärmebildgerätes die Szene zu erfassen und in 1:1 - Darstellung wiederzugeben, das zweite Wärmebildgerät auf ein zu erkennendes Objekt zu richten und dann auf die vergrößerte Darstellung umzuschalten. Derartige Verfahren haben jedoch den Nachteil, daß dem Beobachter entweder nur das Bild der Gesamtszene oder nur ein Detailbild zur Verfügung steht.

Ein Verfahren, bei welchem dem Beobachter sowohl das Bild der gesamten Szene als auch ein Detailbild geboten wird, ist aus der DE-A-31 46 552 bekannt. Dieses Verfahren sieht zumindest zwei Aufnahmesysteme für Bilder unterschiedlicher Abbildungsmaßstäbe und eine entsprechende Anzahl von den jeweiligen Aufnahmesystemen zugeordneten Monitoren vor, wobei in das Schirmbild z.B. eines zweiten Monitors ein variabler Rahmen eingeblendet wird, dessen umschlossener Bildausschnitt dem Gesamtbild eines ersten Monitors entspricht, und wobei der variable Rahmen nach Höhe und Seite automatisch der Relativbewegung der Aufnahmesysteme nachgeführt wird und dessen Rahmengröße ebenfalls automatisch entsprechend der Vergrößerungsänderung des Detailbildes verändert wird. Damit wird dem Beobachter auf einer der Anzahl der Aufnahmesysteme entsprechenden Anzahl von Monitoren, also z.B. auf mindestens zwei Monitoren, gleichzeitig ein Bild der Gesamtszene und ein Detailbild geboten, wobei mittels des eingeblendeten Rahmens auf dem zweiten Monitor erkennbar ist, welches Detail das erste Aufnahmesystem gerade erfaßt und wo das Detailbild des ersten Monitors in der Gesamtszene liegt. Der eingeblendete Rahmen wird aus der Relativbewegung der beiden gegeneinander schwenkbaren Aufnahmesysteme zueinander verstellt. Dieses bekannte Verfahren verwendet aber auf der Bilddarstellungsseite mindestens zwei Monitore, so daß im Falle einer Ein-Mann-Beobachtung der Beobachter bei der Betrachtung eines größeren Bereiches und bei der Beobachtung und Erkennung von Details innerhalb der Gesamtszene sein Augenmerk gleichzeitig auf zwei Monitore zu richten hat bzw. seine Blickrichtung immer von einem Monitor zum anderen Monitor "umschalten" muß. Ein derartiges Verfahren ist daher für eine Ein-Mann-Beobachtung weniger gut geeignet. Außerdem ermöglichen die Übertragungseigenschaften der Gerätekette bis hin zum Auge nur eine begrenzte Detailerkennung in eingeschränkter Entfernung. Außerdem geht durch die Nachführung der Rahmengröße in der größten Vergrößerungsstufe das Bild der Gesamtszene verloren.

Der Erfindung liegt daher die Aufgabe zugrunde, ein Verfahren der eingangs genannten Art und Weise für eine Ein-Mann-Beobachtung zu vereinfachen und dabei die Detailerkennbarkeit bei höherer Entfernung zu verbessern, ohne die notwendige 1:1-Darstellung der Gesamtszene zu verlieren.

Diese Aufgabe wird bei einem Verfahren der eingangs genannten Art gemäß der Erfindung dadurch gelöst, daß nur ein Ausschnitt des TV-Videosignals des NFOV-Kanales von einem Ausschnittselektor ausgewählt wird, und daß dieser Ausschnitt in der Bildmischeinrichtung in das TV-Videosignal des WFOV-Kanales eingeblendet wird, so daß in dem dargestellten Bild gleichzeitig die Übersichtsszene des großen Sehfeldes und der eingeblendete Ausschnitt des kleinen Sehfeldes erscheint.

Die Erfindung sieht also eine gleichzeitige Beobachtung mit zwei optischen Kanälen unterschiedlicher Sehfelder und damit unterschiedlicher Vergrößerung, eine Einblendung eines Ausschnittes aus dem kleinen Sehfeld, d.h. aus dem Vergrößerungskanal, in das Bild der Übersichtsszene und damit in die 1:1-Darstellung sowie eine gleichzeitige Darstellung mittels einer einzigen Bilddarstellungseinrichtung vor. Damit ist ein für eine Ein-Mann-Beobachtung vorteilhaftes Verfahren angegeben, das dem einzigen Beobachter auf einer einzigen Bilddarstellungseinrichtung sowohl eine 1:1-Darstellung der Übersichtsszene als auch ein Detailbild bietet, so daß der einzige Beobachter bei der Betrachtung eines größeren Bereiches und bei der Beobachtung und Erkennung von Details sein Augenmerk nur auf eine einzige Bilddarstellung richten muß. Damit ist die Beobachtung im Falle einer Ein-Mann-Beobachtung erheblich vereinfacht und daher insbesondere zur Flugführung besonders gut geeignet. Außerdem wird dadurch, daß nur ein z.B. ein bestimmtes Zielobjekt enthaltender Ausschnitt des Vergrößerungskanales in das Bild der Übersichtsszene eingeblendet wird, eine höhere Detailerkennbarkeit bei höherer Entfernung ermöglicht, ohne daß die notwendige Orientierungshilfe der 1:1-Darstellung der Übersichtsszene aus dem "Navigationskanal" verloren geht.

Die US-A-4 199 785 zeigt ein Zoom-System. Hierbei wird das ganze Bild des NFOV-Kanales in das Bild des WFOV-Kanales eingeblendet und durch Zooming soweit vergrößert, bis auf dem Display nur noch das in der letzten Vergrößerungsstufe erhaltene Bild des NFOV-Kanales dargestellt wird, d.h. das Bild der Übersichtsszene geht in der letzten Vergrößerungsstufe ganz verloren. Dies bedeutet, daß die volle Detailerkennbarkeit erst in der letzten Vergrößerungsstufe erreicht wird und dafür der Nachteil des totalen Informationsverlustes der Übersichtsszene eintritt. Dieser Nachteil wird bei der Erfindung dadurch vermieden, daß das Bild des NFOV-Kanales nicht durch Zooming vergrößert und nicht das ganze Bild des NFOV-Kanales eingeblendet wird, sondern nur ein Ausschnitt des NFOV-Kanales von einem Ausschnittselektor ausgewählt und nur dieser Ausschnitt in das Bild des WFOV-Kanales eingeblendet wird. Auf dem Display erscheint dann gleichzeitig die Übersichtsszene und der ausgewählte Ausschnitt des NFOV-Kanales, d.h. das Bild der Übersichtsszene geht nicht verloren. Dies bedeutet, daß durch Auswahl und Einblendung nur eines Ausschnittes des NFOV-Kanales in den WFOV-Kanal sofort volle Detailerkennbarkeit (bei höherer Entfernung als im WFOV-Kanal) erreicht wird und die Information über die Übersichtsszene stets erhalten bleibt.

Bei dem TV-System der US-A-3 654 386 wird abwechselnd von einer Kamera auf die andere Kamera umgeschaltet, d.h. zwischen dem WFOV-Kanal und dem NFOV-Kanal hin- und hergeschaltet, so daß die TV-Videosignale beider Kanäle nicht gemeinsanm, sondern hintereinander in verschiedenen Halbbildern sichtbar gemacht werden und es für das Auge des Beobachters nur so erscheint, als würden die TV-Videosignale beider Kanäle gleichzeitig auf der Bilddarstellungseinrichtung sichtbar gemacht werden. Mit einer gleichzeitigen Darstellung eines Mischvideosignales aus dem WFOV- und dem NFOV-Kanal ist die bekannte Darstellung somit nicht vergleichbar. Außerdem wird bei der US-A-3 654 386 die volle Szene des WFOV-Kanales auf der ganzen Fläche (CDEF) des Bildschirmes dargestellt, während nach der Umschaltung von Kamera B auf Kamera A die volle Szene des NFOV-Kanales auf einer kleineren Fläche (GHIJ) des Bildschirmes sichtbar gemacht wird. Es erfolgt daher bei dem bekannten TV-System keine Auswahl und Darstellung nur eines Ausschnitts des NFOV-Kanales.

Besonders vorteilhaft ist das erfindungsgemäße Verfahren bei Visier- und Zielvorgängen einzusetzen, wenn der dargestellte Ausschnitt des NFOV-Kanales durch einen Trackvorgang mittels eines Trackers einer Relativbewegung eines Objektes im kleinen Sehfeld nachgeführt wird. Dem Beobachter wird somit kontinuierlich das ausgewählte Objekt voll dargestellt. Außerdem ist der Beobachter durch die Nachführung des Ausschnittes in der Lage, die optische Achse des WFOV-Kanales dem Objekt nachzuführen, ohne es aus dem Blickfeld zu verlieren.

Weitere Verfahrensschritte sind in den Ansprüchen 2 bis 4 und 6 bis 8 angegeben.

Eine Einrichtung zur Durchführung des Verfahrens ist in den Ansprüchen 9 bis 19 gekennzeichnet.

Um den Aufwand für das Infrarot-Bildsystem auf der Bildaufnahmeseite möglichst niedrig zu halten, ist es vorteilhaft, wenn das Infrarot-Bildsystem aus einer Zwei-Kanal-Kamera besteht, die mit zwei optischen Systemen unterschiedlicher Vergrößerung und mit einem gemeinsamen Scansystem ausgebildet ist. Es ist aber auch möglich, anstelle einer Zwei-Kanal-Kamera zwei diskrete, aufeinander synchronisierte Einzelkameras zu verwenden, was jedoch das System verteuert.

Zweckmäßigerweise besteht auf der Bilddarstellungsseite die Bilddarstellungseinrichtung aus einem Sichtgerät mit einem einzigen Bildschirm. Besonders vorteilhaft ist es jedoch, wenn die Bilddarstellungseinrichtung aus einem Helmsichtgerät besteht. In diesem Fall ist die für das Infrarot-Bildsystem vorgesehene Richtplattform in Azimut und Elevation durch ein Helmvisier des Beobachters ausrichtbar, d.h. bei einer Drehung des Kopfes des Beobachters schwenkt das Infrarot-Bildsystem mit, so daß es in dieselbe Richtung blickt wie der Beobachter. Es ist aber auch möglich, die Richtplattform das Infrarot-Bildsystems mittels einer übergeordneten Steuereinrichtung auszurichten.

Das erfindungsgemäße Verfahren wird im folgenden anhand einer in der Zeichnung schematisch in der Art eines Blockschaltbildes aufgezeigten Ausführungsform einer Einrichtung zur Durchführung des Verfahrens näher beschrieben.

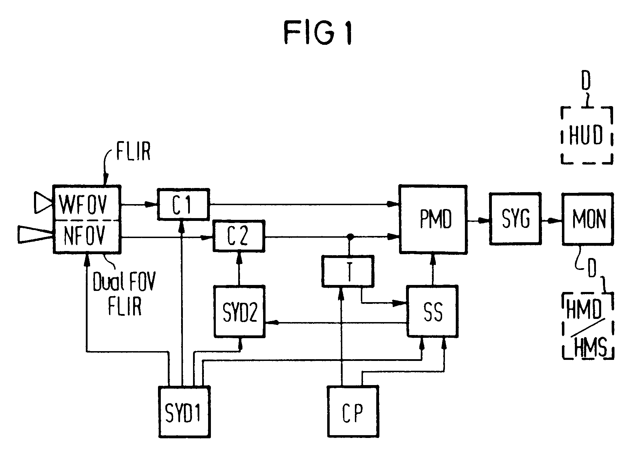

Die Einrichtung nach Fig. 1 besitzt auf der Bildaufnahmeseite ein Infrarot-Bildsystem FLIR (Forward Looking InfraRed), das vorzugsweise aus einer Zwei-Kanal-Kamera Dual FOV FLIR besteht, die auf einer hier nicht näher dargestellten, zweiachsig stabilisierten, in Azimut und Elevation schwenkbaren Richtplattform montiert ist. Das Infrarot-Bildsystem FLIR weist zwei optische Kanäle unterschiedlicher Sehfelder WFOV (Wide Field Of View) und NFOV (Narrow Field Of View) auf. Dementsprechend ist die Zwei-Kanal-Kamera Dual FOV FLIR mit zwei optischen Systemen unterschiedlicher Vergrößerung ausgebildet, wobei das große Sehfeld WFOV z.B. 30 x 40° umfaßt (vertikal x horizontal), während das kleine Sehfeld NFOV dann z.B. etwa 3 x 4° (vertikal x horizontal) hat. Über den WFOV-Kanal wird also eine 1 : 1 - Darstellung einer Szene erzeugt, während über den NFOV-Kanal bei den genannten Werten eine 10-fache Vergrößerung gegeben ist. Die optische Achse des NFOV-Kanales liegt innerhalb des Winkelbereiches des großen Sehfeldes WFOV, vorzugsweise sind die optischen Achsen des NFOV-Kanales und des WFOV-Kanales parallel zueinander ausgerichtet. Die Zwei-Kanal-Kamera Dual FOV FLIR ist ferner noch mit einem gemeinsamen Scansystem ausgebildet.

Mit dem Infrarot-Bildsystem FLIR bzw. der Zwei-Kanal-Kamera Dual FOV FLIR wird eine Szene nun gleichzeitig mit beiden Kanälen des Systems beobachtet. Am Ausgang des Infrarot-Bildsystems FLIR steht die volle Bildinformation beider Sehfelder simultan zur Verfügung. Diese vom Infrarot-Bildsystem generierten IR-Bildsignale werden zunächst mit Hilfe von zwei Umwandlungseinrichtungen C1 und C2 in TV-Videosignale umgewandelt. Mit Hilfe von Steuersignalen, die in einer ersten Synchronisiereinrichtung SYD1 erzeugt werden, werden die TV-Videosignale aufeinander synchronisiert, d.h. fernsehgerecht aufbereitet und dann einer Bildmischeinrichtung PMD zugeführt. Von einem Operator, z.B. vom Beobachter selbst, wird nun über ein Bedienfeld CP und einen Ausschnittselektor SS ein z.B. nur ein bestimmtes Zielobjekt enthaltender Teil des TV-Videosignals des NFOV-Kanals, also lediglich ein Ausschnitt des NFOV-Kanals, von z.B. 1 x 1,5° bei den genannten Werten, in das TV-Videosignal des WFOV-Kanals eingeblendet. Anschließend wird dieses Misch-Videosignal auf der Bilddarstellungsseite in der Weise sichtbar gemacht, daß in dem dargestellten Bild gleichzeitig eine Übersichtsszene des großen Sehfeldes WFOV und ein eingeblendeter Ausschnitt des kleinen Sehfeldes NFOV erscheint, wobei die Größe und die Lage des einzublendenden Ausschnittes, d.h. des einzublendenden Szenendetails, durch ein im Ausschnittselektor SS generiertes Signal gesteuert wird. Zur Sichtbarmachung des Misch-Videosignals auf der Bilddarstellungsseite ist eine einzige Bilddarstellungseinrichtung D vorgesehen, die z.B. aus einem Sichtgerät mit einem einzigen Bildschirm MON besteht. Die Bilddarstellungseinrichtung kann aber auch aus einem Blickfeldsichtgerät HUD oder einem Helmsichtgerät HMD/HMS bestehen, wobei im letzteren Fall die Richtplattform des Infrarot-Bildsystems FLIR in Azimut und Elevation durch das Helmvisier des Beobachters ausrichtbar ist.

Auf dem Weg von der Bildmischeinrichtung PMD zur Bilddarstellungseinrichtung D werden dem Misch-Videosignal in einem Symbolgenerator SYG eine Symbolik zur Kennzeichnung der Lage des dargestellten Ausschnittes im großen Sehfeld WFOV und/oder geeignete zusätzliche Symbolsignale, z.B. zur Darstellung von Betriebszuständen, Referenzachsen, Entfernung, Höhe oder zur Kennzeichnung von Szenendetails, überlagert.

Ferner ist neben der ersten Synchronisiereinrichtung SYD1 noch eine zweite Synchronisiereinrichtung SYD2 vorgesehen, mit deren Hilfe der vom Ausschnittselektor SS ausgewählte Ausschnitt des TV-Videosignals des NFOV-Kanals elektronisch verschiebbar ist und so in das TV-Videosignal des WFOV-Kanals eingeblendet werden kann, daß der darzustellende Ausschnitt des NFOV-Kanales in einem vorgewählten Bereich der Bilddarstellungseinrichtung D erscheint.

Die Einrichtung enthält weiterhin einen Tracker T zum Tracken eines markanten Szenendetails des NFOV-Kanales. Die Aufschaltung des Trackers auf ein Szenendetail erfolgt durch Ausrichtung des Infrarot-Bildsystems FLIR mittels der eingeblendeten Symbole auf das gewünschte Szenendetail. Durch Einschalten der Betriebsart "Tracken" am Bedienfeld CP wird der Tracker aktiviert und gleichzeitig der Ausschnittselektor SS von der Bildmischeinrichtung PMD auf den Tracker T umgeschaltet. Von nun an steuern die vom Tracker erzeugten Tracksignale die Größe und Lage des eingeblendeten Ausschnittes. Bei einer Relativbewegung des getrackten Szenendetails zur Visierlinie des NFOV-Kanales folgt der Ausschnitt dem Szenendetail auf dem Bildschirm MON der Bilddarstellungseinrichtung D innerhalb des möglichen Darstellungsbereiches des NFOV-Kanales, d.h. der Ausschnitt wandert auf dem Bildschirm MON. Durch Aktivierung der zweiten Synchronisiereinrichtung SYD2 vom Bedienfeld CP aus über den Ausschnittselektor SS ist es möglich, das getrackte Szenendetail im eingeblendeten Ausschnitt in fester Position auf dem Bildschirm erscheinen zu lassen. Dies geschieht in der Weise, daß im Bedienfeld CP Signale erzeugt werden, die den Tracker T vom Ausschnittselektor SS entkoppeln und die Synchronisiereinrichtung SYD2 an den Tracker ankoppeln. Der Ausschnittselektor SS steuert den einzublendenden Ausschnitt nach vorprogrammierten Werten. Der Tracker steuert nun über die zweite Synchronisiereinrichtung SYD2 die von der ersten Synchronisiereinrichtung SYD1 an die Umwandlungseinrichtung C2 gelieferten Synchronsignale derart, daß das getrackte Szenendetail im stationären Ausschnitt auf der Bilddarstellungseinrichtung D erscheint.

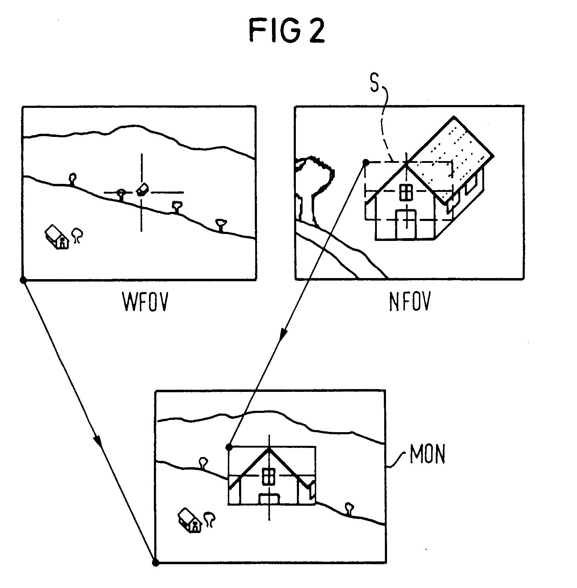

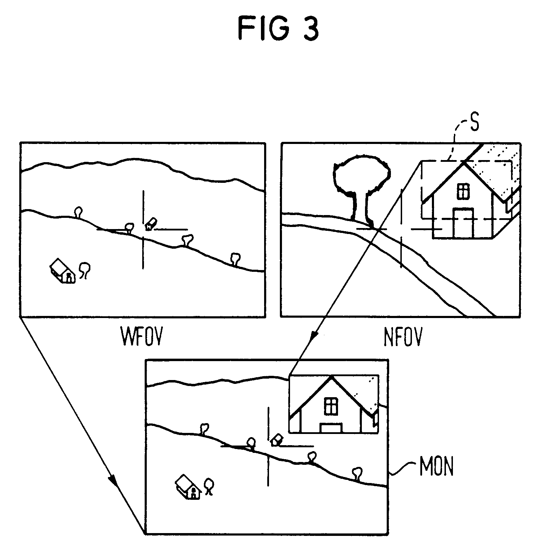

Beispielhafte Darstellungen des Misch-Videosignals auf der Bilddarstellungsseite sind in den Figuren 2 und 3 gezeigt.

In Fig. 2 sind die durch den WFOV-Kanal erfaßte Szene und die durch den NFOV-Kanal erfaßte Szene sowie ein Mischbild gezeigt, bei dem ein durch eine z.B. rechteckige Symbolik S gekennzeichneter Ausschnitt des NFOV-Kanales so in das Bild des WFOV-Kanales eingeblendet ist, daß der Ort des eingeblendeten Ausschnittes im auf dem Bildschirm MON dargestellten Mischbild seiner relativen Lage im kleinen Sehfeld NFOV entspricht.

Eine andere, insbesondere bei der Betriebsart "Tracken" vorgesehene Darstellungsart zeigt Fig. 3. Dort ist der wiederum durch eine Symbolik S gekennzeichnete Ausschnitt des NFOV-Kanales so in das Bild des WFOV-Kanales eingeblendet, daß sich der Ort des eingeblendeten Ausschnittes des auf dem Bildschirm dargestellten Mischbildes etwa im rechten oberen Quadranten befindet, so daß ein bestimmtes Objekt sowohl in der 1 : 1 -Darstellung des WFOV-Kanales in der Übersichtsszene als auch im vergrößerten Ausschnitt des NFOV-Kanales als Detail zu sehen ist.

**Patentansprüche**

1. Verfahren zur Beobachtung einer Szene, bei dem die Szene mit einem auf der Bildaufnahmeseite vorgesehenen Infrarot-Bildsystem (FLIR) mit zwei optischen Kanälen unterschiedlicher Sehfelder (WFOV, NFOV) beobachtet und auf der Bilddarstellungsseite die durch den Kanal mit dem großen Sehfeld (WFOV) erfaßte Übersichts-Szene sowie die durch den Kanal mit dem kleinen Sehfeld (NFOV) erfaßte Szene dargestellt wird, wobei die IR-Bildsignale beider Kanäle zunächst mit Hilfe von zwei Umwandlungseinrichtungen (C1,C2) in TV-Videosignale umgewandelt und mit einer ersten Synchronisiereinrichtung (SYD1) aufeinander synchronisiert und dann einer Bildmischeinrichtung (PMD) zum Erzeugen eines Mischvideosignals zugeführt werden, in welchem die beiden unterschiedlichen Sehfelder gemeinsam erscheinen und das anschließend zur Sichtbarmachung einer einzigen Bilddarstellungseinrichtung (D) zugeführt wird, **dadurch gekennzeichnet,** daß nur ein Ausschnitt des TV-Videosignals des NFOV-Kanales von einem Ausschnittselektor (SS) ausgewählt wird, und daß dieser Ausschnitt in der Bildmischeinrichtung (PMD) in das TV-Videosignal des WFOV-Kanales eingeblendet wird, so daß in dem dargestellten Bild gleichzeitig die Übersichtsszene des großen Sehfeldes (WFOV) und der eingeblendete Ausschnitt des kleinen Sehfeldes (NFOV) erscheint.

2. Verfahren nach Anspruch 1,
**dadurch gekennzeichnet,** daß das Mischvideosignal vor der Darstellung einem Symbolgenerator (SYG) zugeführt und von einer Symbolik zur Kennzeichnung der Lage des dargestellten Ausschnittes im großen Sehfeld (WFOV) überlagert wird.

3. Verfahren nach Anspruch 2,
**dadurch gekennzeichnet,** daß dem Mischvideosignal zusätzliche Symbole, z.B. zur Kennzeichnung von Betriebszuständen, Referenzachsen, Entfernung, Höhe, Szenendetails, überlagert werden.

4. Verfahren nach einem der Ansprüche 1 bis 3,
**dadurch gekennzeichnet,** daß der vom Ausschnittselektor (SS) ausgewählte Ausschnitt des TV-Videosignals des NFOV-Kanales mittels einer zweiten Synchronisiereinrichtung (SYD2) so in das TV-Videosignal des WFOV-Kanales eingeblendet wird, daß der darzustellende Ausschnitt des NFOV-Kanales in einem vorgewählten Bereich der Bilddarstellungseinrichtung (D) erscheint.

5. Verfahren nach einem der vorhergehenden Ansprüche,
**dadurch gekennzeichnet,** daß der dargestellte Ausschnitt des NFOV-Kanales durch einen Trackvorgang mittels eines Trackers (T) einer Relativbewegung eines Objektes im kleinen Sehfeld (NFOV) nachgeführt wird.

6. Verfahren nach Anspruch 5,
**dadurch gekennzeichnet,** daß die Aufschaltung des Trackers (T) auf ein Szenendetail dadurch erfolgt, daß das Infrarot-Bildsystem (FLIR) mittels der eingeblendeten Symbole auf das Szenendetail ausgerichtet wird.

7. Verfahren nach Anspruch 5 oder 6,
**dadurch gekennzeichnet,** daß bei Aktivierung des Trackers (T) von einem Bedienfeld (CP) aus gleichzeitig der Ausschnittselektor (SS) von der Bildmischeinrichtung (PMD) auf den Tracker (T) umgeschaltet wird.

8. Verfahren nach Anspruch 7,
**dadurch gekennzeichnet,** daß zur Fixierung des getrackten Szenendetails in fester Position auf der Bilddarstellungseinrichtung (D) der Tracker (T) vom Bedienfeld (CP) aus vom Ausschnittselektor (SS) entkoppelt und die zweite Synchronisiereinrichtung (SYD2) über den Ausschnittselektor (SS) an den Tracker (T) angekoppelt wird.

9. Einrichtung zur Durchführung des Verfahrens nach Anspruch 1, mit einem Infrarot-Bildsystem (FLIR) mit zwei optischen Kanälen unterschiedlicher Sehfelder (WFOV, NFOV) auf der Bildaufnahmeseite, mit zwei Umwandlungseinrichtungen (C1,C2) zur Umwandlung der IR-Bildsignale beider Kanäle in TV-Videosignale, mit einer ersten Synchronisiereinrichtung (SYD1) zur Synchronisierung der beiden TV-Videosignale aufeinander, mit einer Bildmischeinrichtung (PMD) für die beiden TV-Videosignale und mit einer einzigen Bilddarstellungseinrichtung (D), **dadurch gekennzeichnet,** daß ein Ausschnittselektor (SS) zur Auswahl eines Ausschnittes des TV-Videosignals des NFOV-Kanales vorgesehen und die Bildmischeinrichtung (PMD) zur Einblendung des ausgewählten Ausschnittes des TV-Videosignals des NFOV-Kanales in das TV-Videosignal des WFOV-Kanales an den Ausgang des Ausschnittselektors (SS) und dieser an den Ausgang der ersten Synchronisiereinrichtung (SYD1) angeschlossen ist.

10. Einrichtung zur Durchführung des Verfahrens nach Anspruch 9, **dadurch gekennzeichnet,** daß die Umwandlungseinrichtungen (C1,C2) TV-Kameras sind.

11. Einrichtung zur Durchführung des Verfahrens nach Anspruch 9, **dadurch gekennzeichnet,** daß die Umwandlungseinrichtungen (C1,C2) Teilbildspeicher sind.

12. Einrichtung nach Anspruch 10 oder 11, **dadurch gekennzeichnet,** daß das Infrarot-Bildsystem (FLIR) auf der Bildaufnahmeseite aus einer Zwei-Kanal-Kamera besteht, die mit zwei optischen Systemen unterschiedlicher Vergrößerung und mit einem gemeinsamen Scansystem ausgebildet ist.

13. Einrichtung nach Anspruch 12, **dadurch gekennzeichnet,.** daß das Infrarot-Bildsystem (FLIR) auf einer zweiachsig stabilisierten, in Azimut und Elevation schwenkbaren Richtplattform angeordnet ist.

14. Einrichtung nach einem der Ansprüche 9 bis 13, **dadurch gekennzeichnet,** daß die Bilddarstellungseinrichtung (D) aus einem Sichtgerät mit einem einzigen Bildschirm (MON) besteht.

15. Einrichtung nach einem der Ansprüche 9 bis 13, **dadurch gekennzeichnet,** daß die Bilddarstellungseinrichtung (D) aus einem Blickfeldsichtgerät (HUD) besteht.

16. Einrichtung nach einem der Ansprüche 9 bis 13, **dadurch gekennzeichnet,** daß die Bilddarstellungseinrichtung (D) aus einem Helmsichtgerät (HMD/HMS) besteht.

17. Einrichtung nach Anspruch 16, **dadurch gekennzeichnet,** daß die Richtplattform in Azimut und Elevation durch ein Helmvisier des Beobachters ausrichtbar ist.

18. Einrichtung nach einem der Ansprüche 9 bis 17 **dadurch gekennzeichnet,** daß die optische Achse des NFOV-Kanals innerhalb des Winkelbereiches des großen Sehfeldes (WFOV) liegt.

19. Einrichtung nach Anspruch 18, **dadurch gekennzeichnet,** daß die optischen Achsen des NFOV-Kanales und des WFOV-Kanales parallel zueinander ausgerichtet sind.

**Claims**

1. Method for observing a scene in which the scene is observed with an infrared image system (FLIR) provided on the image pick-up side, with two optical channels of different fields of view (WFOV, NFOV) and on the image display side, the overview scene covered by the channel with the wide field of view (WFOV) and the scene covered by the channel with the narrow field of view (NFOV) is displayed, the IR image signals of both channels first being converted into TV video signals with the aid of two converters (C1,C2) and being synchronised to one another by means of a first synchronising device (SYD1) and then being supplied to a picture mixing device (PMD) for generating a mixed video signal in which the two different fields of view appear jointly and which is then supplied for visualisation to a single image display device (D), characterised in that only a section of the TV video signal of the NFOV channel is selected by a section selector (SS) and in that this section is inserted into the TV video signal of the WFOV channel in the picture mixing device (PMD) so that the overview scene of the wide field of view (WFOV) and the inserted section of the narrow field of view (NFOV) appears simultaneously in the image displayed.

2.　Method according to Claim 1, characterised in that the mixed video signal, before being displayed, is supplied to a symbol generator (SYG) and symbols are superimposed on it for identifying the position of the displayed section in the wide field of view (WFOV).

3.　Method according to Claim 2, characterised in that additional symbols, for example for identifying operating states, reference axes, range, height, scene details are superimposed on the mixed video signal.

4.　Method according to one of Claims 1 to 3, characterised in that the section of the TV video signal of the NFOV channel, selected by the section selector (SS) is inserted into the TV video signal of the WFOV channel by means of a second synchronising device (SYD2) in such a manner that the section of the NFOV channel to be displayed appears in a preselected area of the image display device (D).

5.　Method according to one of the preceding claims, characterised in that the section of the NFOV channel displayed tracks a relative movement of an object in the narrow field of view (NFOV) via a tracking process by means of a tracker (T).

6.　Method according to Claim 5, characterised in that the tracker (T) is locked to a scene detail by the infrared image system (FLIR) being aligned with the scene detail by means of the symbols inserted.

7.　Method according to Claim 5 or 6, characterised in that when the tracker (T) is activated from a control panel (CP), the section selector (SS) is at the same time switched from the picture mixing device (PMD) to the tracker (T).

8.　Method according to Claim 7, characterised in that for fixing the tracked scene detail in a fixed position on the image display device (D), the tracker (T) is decoupled from the section selector (SS) from the control panel (CP) and the second synchronising device (SYD2) is coupled to the tracker (T) via the section selector (SS).

9.　Device for carrying out the method according to Claim 1, comprising an infrared image system (FLIR) having two optical channels of different fields of view (WFOV, NFOV) on the image pick-up side, comprising two converters (C1,C2) for converting the IR image signals of the two channels into TV video signals, with a first synchronising device (SYD1) for synchronising the two TV video signals with one another, with a picture mixing device (PMD) for the two TV video signals and with a single image display device (D), characterised in that a section selector (SS) is provided for selecting a section of the TV video signal of the NFOV channel and the picture mixing device (PMD) is connected to the output of the section selector (SS) and the latter is connected to the output of the first synchronising device (SYD1) for inserting the selected section of the TV video signal of the NFOV channel into the TV video signal of the WFOV channel.

10.　Device for carrying out the method according to Claim 9, characterised in that the converters (C1,C2) are TV cameras.

11.　Device for carrying out the method according to Claim 9, characterised in that the converters (C1,C2) are frame buffers.

12.　Device according to Claim 10 or 11, characterised in that the infrared image system (FLIR) consists on the image pick-up side of a two-channel camera which is constructed with two optical systems of different magnification and with a common scanning system.

13.　Device according to Claim 12, characterised in that the infrared image system (FLIR) is arranged on an aiming platform which is stabilised in two axes and can be rotated in azimuth and elevation.

14.　Device according to one of Claims 9 to 13, characterised in that the image display device (D) consists of a visual display having a single screen (MON).

15.　Device according to one of Claims 9 to 13, characterised in that the image display device (D) consists of a field-of-view display device (HUD).

16.　Device according to one of Claims 9 to 13, characterised in that the image display device (D) consists of a helmet-mounted display device (HMD/HMS).

17. Device according to Claim 16, characterised in that the aiming platform can be aligned in azimuth and elevation through a helmet sight of the observer.

18. Device according to one of Claims 9 to 17, characterised in that the optical axis of the NFOV channel lies within the angular range of the wide field of view (WFOV).

19. Device according to Claim 18, characterised in that the optical axes of the NFOV channel and of the WFOV channel are aligned parallel to one another.

**Revendications**

1. Procédé pour observer une scène, selon lequel la scène est observée au moyen d'un système de formation d'images infrarouge (FLIR), prévu sur le côté d'enregistrement d'images et comportant deux canaux optiques associés à des champs d'observation (WFOV,NFOV) différents et la scène d'ensemble, détectée par le canal associé au grand champ d'observation (WFOV), ainsi que la scène détectée par le canal associé au petit champ d'observation (NFOV) sont représentées sur le côté de représentation des images, et selon lequel les signaux d'image infrarouge des deux canaux sont tout d'abord convertis, à l'aide de deux dispositifs de conversion (C1,C2), en des signaux vidéo de télévision, sont synchronisés successivement au moyen d'un premier dispositif de synchronisation (SYD1) et sont ensuite envoyés à un dispositif mélangeur d'images (PMD) pour la production d'un signal vidéo mixte, dans lequel les deux champs d'observation différents apparaissent en commun et qui est envoyé ensuite, pour sa visualisation, à un seul dispositif de représentation d'images (D), caractérisé par le fait que seule une section du signal vidéo de télévision du canal (NFOV) est sélectionnée par un sélecteur de section (SS), et que cette section est introduite dans le signal vidéo de télévision du canal (WFOV), dans le dispositif mélangeur d'images (PMD) de sorte que la scène d'ensemble du grand champ d'observation (WFOV) et la section insérée du petit champ d'observation (NFOV) apparaissent simultanément dans l'image représentée.

2. Procédé suivant la revendication 1, caractérisé par le fait que le signal vidéo mixte est envoyé, avant la représentation, à un générateur de symboles (SYG) et qu'une symbolique destinée à caractériser la position de la section représentée dans le grand champ d'observation (WFOV) est superposée à ce signal.

3. Procédé suivant la revendication 2, caractérisé par le fait qu'au signal vidéo mixte sont superposés des symboles supplémentaires qui servent par exemple à caractériser des états de fonctionnement, des axes de référence, un éloignement, une hauteur, des détails d'une scène.

4. Procédé suivant l'une des revendications 1 à 3, caractérisé par le fait que la section, sélectionnée par le sélecteur de section (SS), du signal vidéo de télévision du canal (NFOV) est insérée, au moyen d'un second dispositif de synchronisation (SYD2), dans le signal vidéo de télévision du canal WFOV, en sorte que la section devant être représentée du canal NFOV apparaît dans une zone présélectionnée du dispositif de représentation d'images (D).

5. Procédé suivant l'une des revendications précédentes, caractérisé par le fait que la section représentée du canal NFOV est asservie, par un processus de navigation réalisé au moyen d'un dispositif de navigation (T), à un déplacement relatif d'un objet dans le petit champ d'observation (NFOV).

6. Procédé suivant la revendication 5, caractérisé par le fait que la fixation du dispositif de navigation (T) sur un détail de la scène est obtenue par le fait que le système de formation d'images infrarouge (FLIR) est dirigé, au moyen des symboles insérés, sur le détail de la scène.

7. Procédé suivant la revendication 5 ou 6, caractérisé par le fait que lors de l'activation du dispositif de navigation (T) à partir d'un panneau de commande (CP), le sélecteur de section (SS) est commuté simultanément du dispositif mélangeur d'images (PMD) sur le dispositif de navigation (T).

8. Procédé suivant la revendication 7, caractérisé par le fait que pour la fixation du détail de la scène de navigation dans une position fixe dans le dispositif de représentation d'images (D), le dispositif de navigation (T) est découplé du sélecteur de section (SS) à partir du panneau de commande (CP) et le second dispositif de synchronisation (SYD2) est couplé au dispositif de navigation (T) par l'intermédiaire du sélecteur de section (SS).

9. Dispositif pour la mise en oeuvre du procédé suivant la revendication 1, comportant

un système de formation d'images infrarouge (FLIR) comportant deux canaux optiques associés à des champs d'observation (WFOV, NFOV) différents, sur le côté d'enregistrement des images,

deux dispositifs de conversion (C1,C2) servant à convertir les signaux d'image infrarouge de deux canaux en des signaux vidéo de télévision, un premier dispositif de synchronisation (SYD1) servant à synchroniser les deux signaux vidéo de télévision l'un sur l'autre, un dispositif mélangeur d'images (PMD) pour les deux signaux vidéo de télévision et un seul dispositif de représentation d'images (D), caractérisé par le fait qu'un sélecteur de section (SS) est prévu pour la sélection d'une section du signal vidéo de télévision du canal (NFOV) et que le dispositif mélangeur d'images (PMD) destiné à insérer la section sélectionnée du signal vidéo de télévision du canal NFOV dans le signal vidéo du canal de télévision WFOV est raccordé à la sortie du sélecteur de section (SS) et que ce dernier est raccordé à la sortie du premier dispositif de synchronisation (SYD1).

10. Dispositif pour la mise en oeuvre du procédé suivant la revendication 9, caractérisé par le fait que les dispositifs de conversion (C1,C2) sont des caméras de télévision.

11. Dispositif pour la mise en oeuvre du procédé suivant la revendication 9, caractérisé par le fait que les dispositifs de conversion (C1,C2) sont des mémoires d'images partielles.

12. Dispositif suivant la revendication 10 ou 11, caractérisé par le fait que le système de formation d'images infrarouge (FLIR) situé sur le côté d'enregistrement des images est constitué par une caméra à deux canaux, qui est conçue avec deux systèmes optiques ayant des grandissements différents et un système commun de balayage.

13. Dispositif suivant la revendication 12, caractérisé par le fait que le système de formation d'images infrarouge (FLIR) est disposé sur une plate-forme directionnelle stabilisée suivant deux axes et pouvant pivoter en azimut et en élévation.

14. Dispositif suivant l'une des revendications 9 à 13, caractérisé par le fait que le dispositif de représentation d'images (D) est constitué par un appareil de visualisation possédant un seul écran (MON).

15. Dispositif suivant l'une des revendications 9 à 13, caractérisé par le fait que le dispositif de représentation d'images (D) est constitué par un appareil de visualisation à champ visuel (HUD).

16. Dispositif suivant l'une des revendications 9 à 13, caractérisé par le fait que le dispositif de représentation d'images (D) est constitué par un appareil de visualisation à casque (HMD/HMS).

17. Dispositif suivant la revendication 16, caractérisé par le fait que la plate-forme directionnelle peut être orientée en azimut et en élévation au moyen d'un viseur à casque de l'observateur.

18. Dispositif suivant l'une des revendications 9 à 17, caractérisé par le fait que l'axe optique du canal NFOV est situé à l'intérieur de la zone angulaire du grand champ d'observation (WFOV).

19. Dispositif suivant la revendication 18, caractérisé par le fait que les axes optiques du canal NFOV et du canal WFOV sont parallèles entre eux.

# FIG 1

# FIG 2

WFOV

NFOV

MON

# FIG 3

WFOV

NFOV

MON